**Europäisches Patentamt**

**European Patent Office**

**Office européen des brevets**

(11) Veröffentlichungsnummer: **0 315 039**
**A2**

# EUROPÄISCHE PATENTANMELDUNG

(21) Anmeldenummer: 88117827.1

(22) Anmeldetag: 26.10.88

(51) Int. Cl.⁴: **B62J 13/00**

(30) Priorität: 31.10.87 DE 8714518 U

(43) Veröffentlichungstag der Anmeldung:
**10.05.89 Patentblatt 89/19**

(84) Benannte Vertragsstaaten:
**AT BE CH DE FR GB IT LI NL**

(71) Anmelder: **Heinz Kettler GmbH & Co.**
**Neheimer Strasse 22**
**D-4763 Ense-Parsit(DE)**

(72) Erfinder: **Hilliges, Wolfgang**
**Benditstrasse 1,**
**D-4760 Werl,(DE)**

(74) Vertreter: **Richter, Bernhard, Dipl.-Ing.**
**Beethovenstrasse 10**
**D-8500 Nürnberg 20(DE)**

(54) **Schutz von Fahrradketten und insbesondere von Schaltwerk und Zahnrädern der Hinterradachse von Fahrrädern.**

(57) Die Erfindung betrifft einen schutz von Fahrradketten und insbesondere von Schaltwerk und Zahnrädern der an der Hinterradachse vorgesehenen
Gangschaltung eines Fahrrades. Um den schutz der
Fahrradkette und insbesondere auch des Schaltwerkes und der Zahnräder der Gangschaltung an der
Hinterradachse eines Fahrrades zu verbessern, ist
ein langgestreckter Astabweiser (14) an der außen
gelegenen Seite der Fahrradkette, bevorzugt auch
der Zahnräder (3) und übrigen Bauteilen (13) der
Gangschaltung vorgesehen.

Fig. 1

EP 0 315 039 A2

**"Schutz von Fahrradketten und insbesondere von Schaltwerk und Zahnrädern der Hinterradachse von Fahrrädern."**

Die Erfindung betrifft einen Schutz gemäß dem Oberbegriff des Anspruches 1. Hierzu kennt man als Schutz gon Fahrradketten die üblichen Abdekkungen, die aber primär eine umgekehrte Zielrichtung haben, nämlich zu verhindern, daß der Benutzer des Rades mit seinen Kleidungsstücken oder dem Bein an die ölige Fahrradkette kommt und seine Kleidung bzw. sein Bein davon beschmutzt wird. Ferner kennt man für das weitere und bevorzugte Schutzgebiet dieser Erfindung einen an der Hinterradachse angebrachten etwa Uförmigen Bügel, der sich an der Außenseite der Zahnräder der Gangschaltung befindet und bei einem Umfallen des Fahrrades zu dieser Seite hin verhindern soll, daß das Schaltwerk beschädigt wird. Nachteiligerweise ist dieser Bügel relativ kurz und schützt nicht das gesamte Schaltwerk. Ein Schutz gegen vom Erdboden vorragende oder hochschnellende Äste fehlt überhaupt.

Die Aufgabe der Erfindung besteht demgegenüber darin, den schutz der Fahrradkette und insbesondere auch Schaltwerk und Zahnräder der Gangschaltung an der Hinterrad achse eines Fahrrades zu verbessern.

Ausgehend vom Oberbegriff des Anspruches 1 wird die Lösung dieser Aufgabe zunächst im Kennzeichen des Anspruches 1 gesehen. Hiermit sind die Fahrradkette und bevorzugt auch das Schaltwerk und die Zahnräder der Gangschaltung weitgehend gegen hochschnellende oder hochragende Äste und Zweige geschützt, die andernfalls durch Eindringen in die Ketten- und Zahnradtriebe diese empfindlich beschädigen können. Auch besteht durch solche Äste die Gefahr, daß der Fahrbetrieb ruckartig blockiert und der Fahrer vom Rad geschleudert wird.

Die Merkmale des Anspruches 2 stellen eine vorteilhafte Arretierung des Astabweisers an der auf der entsprechenden Radseite liegenden, etwa waagerecht verlaufenden Gabelstrebe des Hinterrades dar. Dies verhindert ein unbeabsichtigtes Hineindrücken des Astabweisers in den Bereich der Speichen.

Eine bevorzugte Ausführungsform der Erfindung ist Gegenstand des Anspruches 3. Die Befestigung des Astabweisers am Zahnradschaltungsschutz ergibt ein in sich einheitliches Schutzelement, das sowohl den Schutz gegen Äste als auch den schutz der Zahnradschaltung beinhaltet. Dieses Schutzelement kann an der Hinterradachse angeschraubt werden und ist so bemessen, daß der Astabweiser in dieser Betriebslage an der vorgenannten Gabelstrebe des Hinterrades anliegt. Dies bedeutet, daß der Astabweiser an beiden Enden fest gehalten, bzw. abgestützt ist und daher auch nicht von größeren, stärkeren Ästen in unzulässiger Weise verbogen, bzw. in die Speichen hineingedrückt wird.

Die Merkmale des Anspruches 4 erreichen einen Schutz nicht nur der dort befindlichen Zahnräder der Schaltung, sondern auch der übrigen Elemente der am Hinterrad befindlichen Schaltung, bzw. Schaltwerkes, einschließlich des am rückwärtigen Ende des unteren Zahnkettentrums befindlichen Zahnrades. Zugleich ist damit eine entsprechende Länge des Astabweisers erreicht, so daß er sich von der genannten waagerechten Gabelstrebe bis unterhalb des unteren Schaltund Zahnradkettentrums erstreckt und amit den infrage kommenden räumlichen Schutzbereich hinreichend abdeckt.

Anspruch 5 ist eine bevorzugte, konstruktiv ausreichende, große und sehr stabile Ausführung des Schaltungsschutzes.

Weitere Einzelheiten und Vorteile der Erfindung sind der nachfolgenden Beschreibung und der zugehörigen Zeichnung eines erfindungsgemäßen Ausführungsbeispieles zu entnehmen. In der Zeichnung zeigt:

Fig. 1: eine teilweise Seitenansicht des Hinterrades eines Fahrrades mit einer Ausführungsform der Erfindung,

Fig. 2: eine Seitenansicht auf den kombinierten Astabweiser sowie Schaltwerk- und Zahnradschutz gemäß dem Pfeil A in Fig. 1.

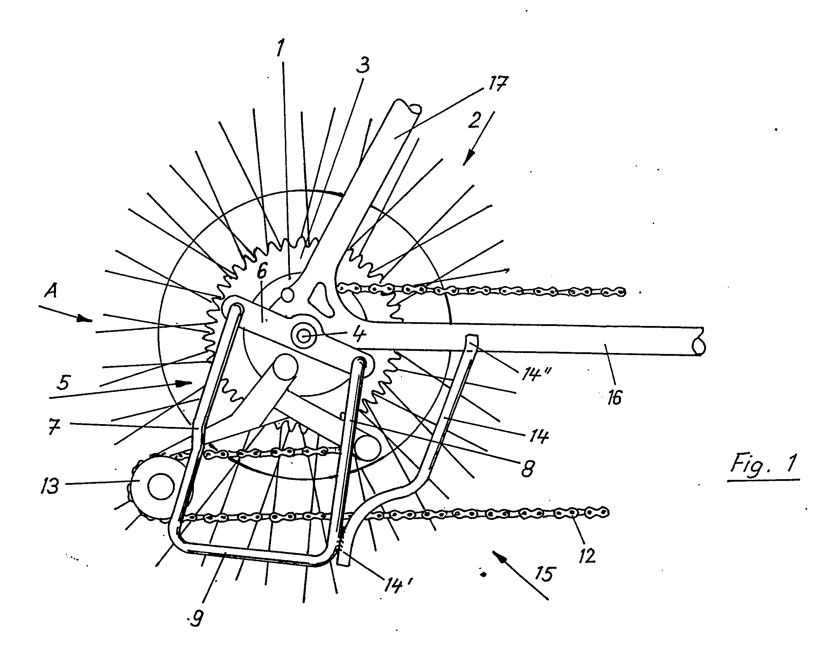

Fig. 1 zeigt die Nabe 1 des Hinterrades 2 eines Fahrrades, wobei das Hinterrad und übrige Bauelemente des Fahrrades nur teilweise gezeichnet sind. An der Nabe befinden sich auch die Zahnräder 3 der Gangschaltung.

An der Achse 4 des Hinterrades 2 ist ein Zahnrad- und Schaltungsschutz 5 befestigt. Hierzu ist in einem oberen Quersteg 6 des Schaltungsschutzes 5 eine Bohrung 19 vorgesehen, welche über die Achse 4 gesteckt wird, auf der der Zahnrad- und Schaltungsschutz dann durch eine Schraubmutter befestigt wird.

Der Zahnrad- und Schaltungsschutz 5 besitzt ferner zwei seitliche Längsstreben 7, 8 und eine untere Querstrebe 9, so daß er insgesamt etwa in der Ansicht gemäß Fig. 1 ein Rechteck bildet. Die Erfindung ist aber nicht auf diese Formgebung beschränkt.

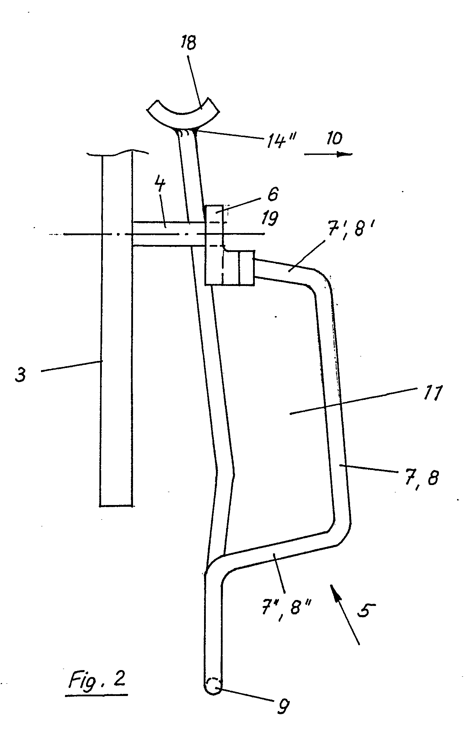

Die zugehörige Seitenansicht gemäää Fig. 2 zeigt, daß die Längsstreben 7, 8 von der oberen Querstrebe 6 her zunächst gemäß Ziffer 7', 8' nach

2

außen (Pfeilrichtung 10) geführt sind, dann im entsprechenden Abstand von der Nabe 3 nach unten verlaufen um dann schließlich gemäß Ziffern 7", 8" wieder nach innen, d. h. in Richtung zur Nabe 3 zurückgeführt sind, bis sie an der unteren Querstrebe 9 einden. Damit können im vom o.g. Schutz 5 umgebenen Raum 11 die außerhalb der Nabe liegenden Teile der Gangschaltung bzw. des Schaltwerkes, sowie dort vorgesehene Zahnräder gegen ein Beschädigen durch Umfallen oder dergleichen geschützt untergebracht werden. Dabei ist es besonders von Vorteil, daß der o.g. Schutz 5 soweit nach unten geführt ist, daß er über das untere Zentrum 12 der Kette vorragt und damit sowohl diese Kette, als auch das am hinteren Ende des Zentrums 12 vorgesehene Zahnrad 13 schützt.

Ein Astabweiser 14 gemäß der Erfindung dient dazu, etwa in Pfeilrichtung 15 beim Fahrbetrieb ankommende Äste oder Zweige von der Fahrradkette, insbesondere deren unteren Trums 12 und auch von den Zahnrädern und sonstigen Bauteilen der Gangschaltung abzuhalten. Hierzu ist der langgestreckte Astabweiser 14 an der außen gelegenen Seite de Fahrradkette und bevorzugt auch im Einzugsbereich der Gangschaltung vorgesehen. Die Befestigung des Astabweisers kann am Fahrrad in verschiedener Weise erfolgen, z.B. an der Hinterradachse 4 oder der unteren, waagerechten Gabelstrebe 16, bzw. auch an der oberen von der Achse 4 zum Sattel verlaufenden Gabelstrebe 17. In einer bevorzugten und in der Zeichnung dargestellten Ausführungsform ist der Astabweiser 14 mit seinem unteren Ende 14' am unteren Bereich des Zahnrad- und Schaltungsschutzes 5 angebracht, z.B. angeschweißt. Sein oberes Ende 14" läuft in eine Gabel 18 oder entsprechendes kreisförmiges Teil aus und stützt sich damit an der Unterseite der entsprechenden Strebe 16 der waagerechten Gabel ab (siehe Fig 1). Damit sind beide Enden 14' und 14" des Astabweiser 14 in der Betriebslage sicher gehalten.

Alle dargestellten und beschriebenen Merkmale sowie ihre Kombinationen untereinander sind erfindungswesentlich.

## Ansprüche

1. Schutz von Fahrradketten und insbesondere von Schaltwerk und Zahnrädern der an der Hinterradachse vorgesehenen Gangschaltung eines Fahrrades, **dadurch gekenn zeichnt**, daß ein langgestreckter Astabweiser (14) an der außen gelegenen Seite der Fahrradkette, bevorzugt auch der Zahnräder (3) und übrigen Bauteilen (13) der Gangschaltung vorgesehen ist.

2. Schutz nach anspruch 1, dadurch gekennzeichnet, daß der Astabweiser (14) an einer etwa waagerecht verlaufenden Gabelstrebe (16) des Hinterrades abgestützt oder befestigt ist.

3. Schutz nach Anspruch 1 und 2, dadurch gekennzeichnet, daß der Astabweiser (14) mit einem Ende (14') an einem Zahnrad- und Schaltungsschutz (5) befestigt ist und an seinem anderen Ende (14") eine z.B. gebel-oder kreisförmige Abstützung (18) aufweist, die in der Betriebslage an der waagerechten Gabelstrebe (16) des Hinterrades anliegt.

4. Schutz nach Anspruch 3, dadurch gekennzeichnet, daß der Zahnrad- und Schaltungsschutz (5) von seiner Befestigung an der Hinterradachse (4) her nach außen geführt ist (7', 8') sich von doert etwa nach unten erstreckt (7, 8) und im unteren Bereich wieder nach innen zur Radnabe hin verläuft (7", 8"), wobei der Astabweiser (14) am unteren Bereich des Zahnrad- und Schaltungsschutzes (5) angebracht ist.

5. Schutz nach Anspruch 4, daduch gekennzeichnet, daß der Zahnrad- und Schaltungsschutz (5) etwa die Form eines in sich geschlessenen Rechteckes aufweist, wobeii die obere Querstrebe (6) dieses Rechteckes zur Anbringung des Zahnrad- und Schaltungsschutzes an der Achse (4) des Hinterrades dient und die untere Querstrebe (9) sich in der Betriebslage unterhalb des unteren Trums (12) der Fahrradkette befindet und daß neben dieser unteren Querstrebe die untere Befestigungsstelle (14") des Astabweisers (14) vorgesehen ist.

Fig. 1

Fig. 2